(19) Europäisches Patentamt
European Patent Office
Office européen des brevets

(11) **EP 2 608 349 B1**

(12) **EUROPEAN PATENT SPECIFICATION**

(45) Date of publication and mention
of the grant of the patent:
**25.07.2018  Bulletin 2018/30**

(51) Int Cl.:
***H02J 3/14*** *(2006.01)*

(21) Application number: **12193610.8**

(22) Date of filing: **21.11.2012**

(54) **System and method of controlling operation of electric device**

System und Verfahren zur Steuerung des Betriebs einer elektrischen Vorrichtung

Système et procédé de commande du fonctionnement d'un dispositif électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2011  JP 2011281944**

(43) Date of publication of application:
**26.06.2013  Bulletin 2013/26**

(73) Proprietor: **Kabushiki Kaisha Toshiba
Minato-ku,
Tokyo 105-8001 (JP)**

(72) Inventors:
• **Naoi, Shinya
Tokyo 105-8001 (JP)**

• **Noro, Yasuhiro
Tokyo 105-8001 (JP)**
• **Kumazawa, Toshimitsu
Tokyo 105-8001 (JP)**
• **Kiya, Genki
Tokyo 105-8001 (JP)**

(74) Representative: **AWA Sweden AB
P.O. Box 11394
404 28 Göteborg (SE)**

(56) References cited:
**WO-A1-2011/142131     US-A- 5 462 225
US-A1- 2011 098 869**

**Description**

**CROSS-REFERENCE TO RELATED APPLICATION(S)**

This application is based upon and claims the benefit of priority from Japan Patent Application(s) No. 2011-281944, filed on December 22, 2011.

**TECHNICAL FIELD**

The present disclosure relates to a system and method for controlling an operation of an electric device intended for various devices, apparatuses, and systems.

**BACKGROUND**

Recently, the introduction of a photovoltaic power generation is in progress for the purpose of reducing $CO_2$ emissions or the like. The photovoltaic power generation, which is dependent upon weather, has characteristics in which an output thereof cannot be controlled. Such characteristics imply that there is a possibility that unused power in excess of the level of demand is generated, in particular, on holidays or days of rest in the spring and autumn in which power demand is low.

In such a case, there is an unbalance between supply and demand of power and frequency is increased resulting in an operation of a frequency relay, potentially creating an extensive power failure. As a countermeasure, a method of restraining an output of photovoltaic generation or charging the surplus in a battery has been considered.

Another countermeasure may include a method of operating a load of a consumer according to a request or command from a power system operator to thereby increase power demand.

Conversely, in a situation in which the available power supply is in shortage, if demand surpasses power supply capabilities, frequency is reduced resulting in an operation of a frequency relay, potentially creating an extensive power failure. In such a case, a method of stopping electric devices to thereby reduce demand of consumers may also be considered.

[Related Technical Documents]

[Patent Documents]

[Patent Document 1] JP-A-2006-203959

When loads respond to a request or command of a power system operator simultaneously as described above, a generator cannot respond to an instantaneous change and a frequency change occurs.

In WO2011142131 A1, an input unit receives an input of desired time information, which denotes either a desired operation start time or a desired operation end time of a household appliance device. A transmitter unit transmits the desired time information, and electricity information that denotes electricity required to operate the household appliance device, to a server. A server receiver unit receives the desired time information and the electricity information. An electricity fee information acquisition unit acquires electricity fee information that denotes the change per hour in electricity fees. An operation time computation unit computes either the operation start time or the operation end time of the household appliance device, on the basis of the desired time information, the electricity information, and the electricity fee information. A server transmitter unit transmits either the operation start time or the operation end time to the household appliance device. An operation control unit commences the operation of the household appliance device in accordance with either the operation start time or the operation end time

US 2011/098869 discloses an electric appliance which includes a communication device connected with a smart grid net to recognize electric power information including power-rate information for each time period, a sensing device configured to sense a predetermined operation mode and an operation state according to the operation mode, and a control device configured to implement power-saving operation based on the received electric power information and the state information sensed by the sensing device.

US 5462225 relates to an apparatus and method for controlling distribution of electrical energy to a space conditioning load. US 5462225 discloses that the length of a time delay is based upon a pseudo-random timing function, to allow each switch to operate with a different time delay.

**SUMMARY**

The present disclosure provides some embodiments of a system for controlling an operation of an electric device and an operation method which are capable of restraining electric devices from responding simultaneously and restraining the electric devices to a variation at which a generator can respond, thereby restraining the degradation of power quality.

According to one embodiment of the present disclosure, there is provided a system as defined in claim 1.

**BRIEF DESCRIPTION OF THE DRAWINGS**

The accompanying drawings, which are incorporated in and constitute a part of the specification, illustrate embodiments of the present disclosure, and together with the general description given above and the detailed description of the embodiments given below, serve to explain the principles of the present disclosure.

**FIG 1** is block diagram showing an overall configuration of a first example.
**FIG. 2** is a block diagram of a consumer management device and a load control device in the first example.
**FIG. 3** is a graph showing a load change of a related art.
**FIG. 4** is a graph showing a load change of the first example.
**FIG. 5** is a flow chart illustrating processing of the first example.
**FIG. 6** is a graph showing a first example of an operation initiation time.
**FIG. 7** is a graph showing a second example of an operation initiation time.
**FIG. 8** is a graph showing a third example of an operation initiation time.
**FIG. 9** a graph showing a first example of an operation time interval.
**FIG. 10** a graph showing a second example of an operation time interval.
**FIG. 11** a graph showing a third example of an operation time interval.
**FIGS. 12A to 12C** are views showing a plurality of methods for releasing a power limitation command.
**FIG. 13** is a block diagram showing the configuration of a second example.
**FIG. 14** is a block diagram of a consumer management device and a load control device in the second example.
**FIG. 15** is a flow chart illustrating an example of processing of the second example.
**FIG. 16** is a flow chart illustrating another example of processing of the second example.
**FIG 17** is a block diagram showing the configuration of a third example.
**FIG 18** is a block diagram of a system management device and a load control device in the third example.
**FIG 19** is a flow chart illustrating processing of the third example.
**FIG. 20** is a block diagram showing the configuration of a fourth example.
**FIG. 21** is a block diagram of a load control device in the fourth example.
**FIG. 22** is a block diagram showing the configuration of a fifth example.
**FIG. 23** is a block diagram of a consumer management device and a load control device in the fifth example.
**FIG. 24** is a graph showing an example of processing of the fifth example.
**FIG 25** is a graph showing another example of processing of the fifth example.
**FIG. 26** is a block diagram showing the configuration of a sixth example.
**FIG. 27** is a block diagram of a consumer management device, a load control device, and a generation device control device in the sixth example.
**FIG. 28** is a graph showing an example of a load and a generator output in the sixth example.
**FIG. 29** is a graph showing another example of a load and a generator output in the sixth example.
**FIG. 30** is a block diagram of a consumer management device and a load control device in an embodiment of the present invention.
**FIG. 31** is a graph showing a method of calculating an operation time in the aforementioned embodiment.

**DETAILED DESCRIPTION**

1. First Example

(1) Configuration

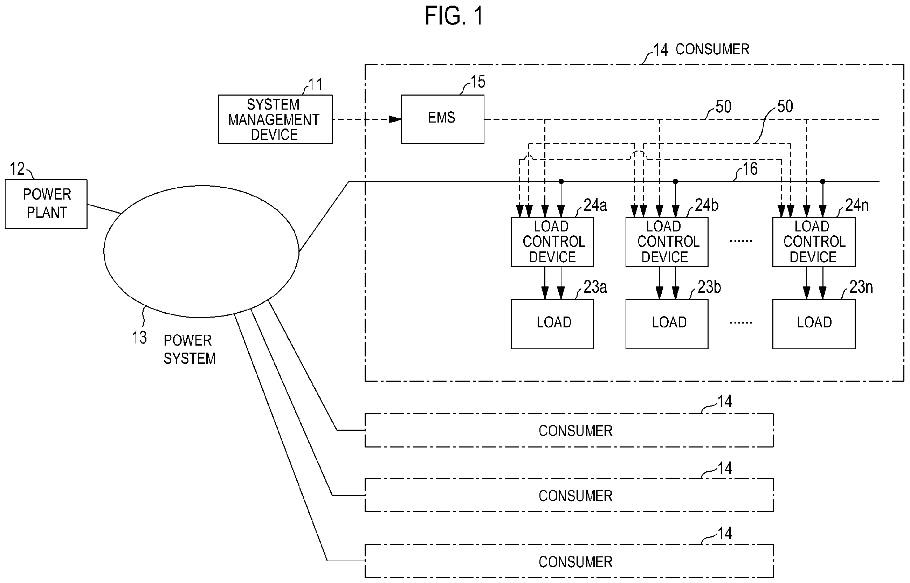

**FIG. 1** is a block diagram showing an overall configuration of the present example. In the present example, a system management device 11 manages and operates one or more power plants 12, a power system 13, and a consumer 14 associated with the power system 13. The consumer 14 includes an energy management system (EMS) 15 connected to the system management device 11 by a communication line 50.

The system management device 11 may be a device such as a control panel operated by a management operator or may be management software provided in a computer of the control panel. The consumer 14 may be a single consumer or a group of consumers of a certain range of area, a building, an apartment complex, a plant, as long as the consumer(s) is/are managed by the system management device 11.

In order to receive electricity from power system 13, the consumer 14 has a power line 16 laid, and loads 23a-23n, such as electric devices, are connected to the power line 16 to use electricity. The respective loads 23a-23n include each load control device 24a-24n having a communication/computation function, and the load control devices 24a-24n are connected to different load control devices 24a-24n or the EMS 15 by way of the communication line 50. The load control device 24a-24n may be installed in the loads 23a-23n or may be separately installed.

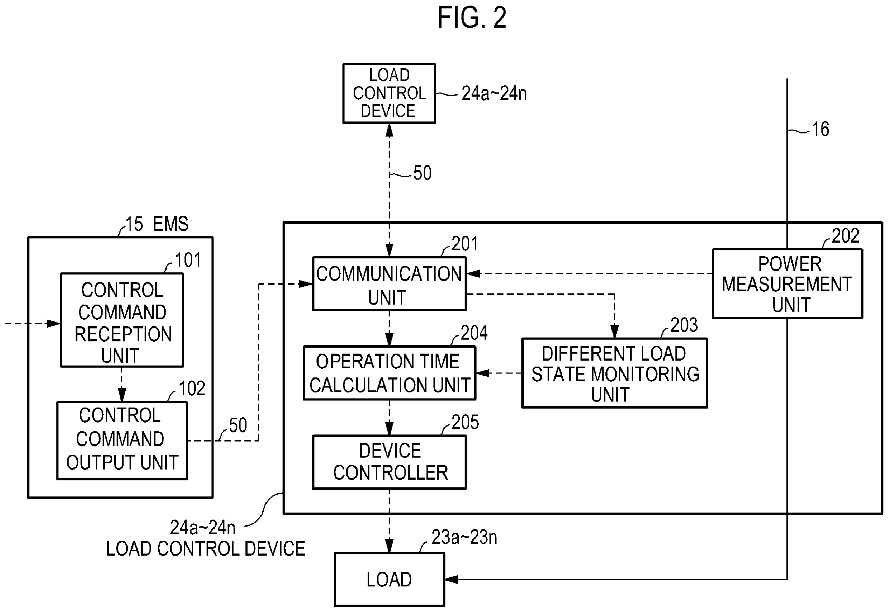

**FIG. 2** is a block diagram showing the configuration of the EMS 15 and the load control devices 24a-24n. As shown in **FIG. 2,** the EMS 15 includes a reception unit 101 for receiving a command from the system management device 11 and an output unit 102 for transmitting a control command with respect to each load control device 24a-24n. Meanwhile, the EMS 15 is not limited to the configuration in which the reception unit 101 and the output unit 120 are integrated. For example, the reception unit 101 may allow the consumer 14 to receive a control command from the system management device 11 by means of a phone, a facsimile, a mail, or the like therethrough, and the output unit 102 may allow the consumer 14 to manually input a control command by using a manipulation panel or the like installed in each load control device 24a-24n.

The load control devices 24a-24n each include a communication unit 201 for exchanging information between the EMS 15 and different load control devices 24a-24n and a power measurement unit 202 for measuring an amount of power supply to the loads 23a-23n connected to each load control device 24a-24n.

The amount of power measured by the power measurement unit 202 is transmitted to different load control devices 24a-24n through the communication unit 201. A monitoring unit 203 for checking an operation state of a different load based on the amount of power transmitted from different load control devices 24a-24n is connected to the communication unit 201.

That is, when a control command is inputted to each load control device 24a-24n, it may not be necessarily limited to a determination that the respective loads 23a-23n connected to the control devices are in operation. If the respective loads 23a-23n are in a halted state, there is no need to increase or decrease power used by the loads based on the control command. Thus, in the present example, the usage amount of power of the respective loads 23a-23n is measured by the power measurement unit 202 to thus recognize an operation state of the respective loads 23a-23n, and the recognized operation state of the respective loads 23a-23n is transmitted to the monitoring unit 203 of different load control devices 24a-24n to thus recognize the number of loads to be subjected to a control command.

Similarly, the monitoring unit 203 has a function of checking whether or not a control command has been inputted to each load control device 24a-24n thereof, and transmitting information that the control command has been inputted to different load control devices 24a-24n through the communication unit 201. Also, the monitoring unit 203 has a function of checking how many loads the control command has been inputted upon receiving from different load control devices 24a-24n information that the control command has been inputted to the different load control devices 24a-24n.

That is, when the consumer has a plurality of loads, it may not necessarily be limited to that the control command has been inputted to all the loads. The consumer may input the control command only to some of the loads managed by itself according to a certain reference or priority. When a different operation time is set to the plurality of loads, the respective loads may have a different operation time according to the number of loads to which the control command is inputted. Thus, in the present example, the monitoring unit 203 is installed in the respective load control devices 24a-24n to check whether or not the control command has been inputted to a different load, thus checking the number of loads to which an operation time is set.

A calculation unit 204 for calculating a time for starting an operation of the respective loads 23a-23n is installed in each load control device 24a-24n. The communication unit 201 and the monitoring unit 203 are connected to the calculation unit 204. That is, the calculation unit 204 calculates an operation time of each load based on the number of loads to which the control command from the system management device 11 received through the communication unit 201 and the control command obtained from the monitoring unit 203 are inputted.

In this case, each calculation unit 204 of each of the load control devices 24a-24n may calculate each operation time, or the calculation unit 204 of one of the load control devices 24a-24n may calculate an operation time of every load according to a preset order, and transmit the calculation result to different load control devices 24a-24n.

A device controller 205 is connected to an output side of the calculation unit 204, and the device controller 205 operates the loads 23a-23n at a specified time according to the calculation result of the calculation unit 204.

(2) Operation

An operation of the present example will be described.

When power is excessive in the power system, or when power is insufficient in the power system, the system management operator transmits a control command requesting an increase or decrease in power demand at a designated time t0 to the consumer 14 by using the system management device 11. The control command may be transmitted the day before or at a specified hour (e.g., "Please react at a certain hour") or may be transmitted immediately (e.g., "Please react on the spot"), but in the present example, the control command is not dependent upon the timing at which the request signal is transmitted. Also, any method may be used as long as it can transfer the information, regardless of whether or not the information is transmitted through a fixed line or wirelessly.

The control command from the system management device 11 is received by the reception unit 101 of the consumer 14 and received by each load control device 24a-24n by way of the output unit 102. When the communication unit 201 in each load control device 24a-24n receives the control command, the operation time calculation unit 204 calculates an operation start time of each load 23a-23n according to a predetermined method. The operation time is calculated such that the loads 23a-23n are not operated simultaneously and time is taken for the operations of the loads to be completed.

For example, when it is defined that a time difference between a point in time at which a first load operates and a point in time at which the operations of all the loads are completed is tg, if the time difference is less than 5 minutes, a response from the power plant 12 is delayed, so from a viewpoint of the response of the power plant 12, the power plant 12 may sufficiently respond for 20 minutes. Additionally, from a viewpoint of quickly reacting to a request from the system management operator, more than 20 minutes is undesirable. Thus, tg is preferably determined to range from 5 to 20 minutes.

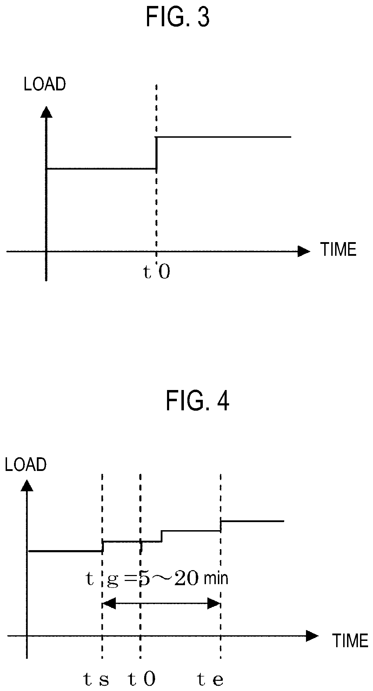

This status will be described with reference to the drawings. When all the loads are operated at the designated time t0 as in the related art, a great load change instantaneously occurs as shown in **FIG. 3.** In comparison, in the present example, as shown in **FIG. 4,** the calculation unit 204 of each load control device 24a-24n calculates an operation time of each load 23a-23n such that a load change is distributed in the vicinity of the designated time t0.

The time duration tg from a point in time at which loads starts to operate to a point in time at which the operations of the loads are terminated may be equal to every consumer or may be different for each consumer. That is, the time duration tg may be 5 minutes for one consumer, while it may be 15 minutes for another consumer. The time durations may be appropriately determined according to the size of the consumer 14, a capacity of an electric device such as a load, or the like.

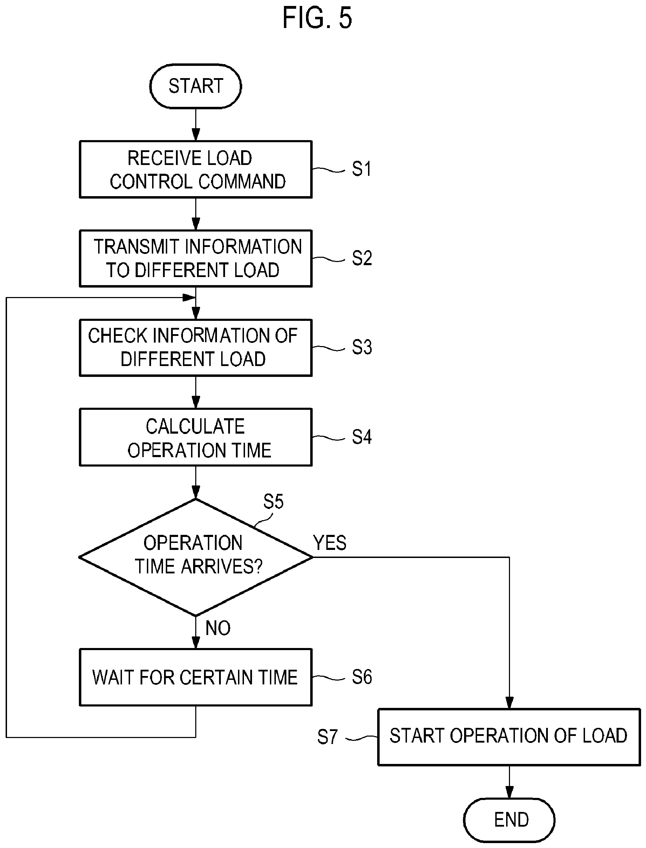

**FIG. 5** is a flow chart illustrating an operation of each load control device 24a-24n connected to the loads 23a-23n. When the consumer 14 receives a control command from the system management device 11 of the power system by the reception unit 101, the consumer 14 manipulates each load control device 24a-24n based on the received control command to thus control the operation of the loads 23a-23n. Here, the consumer 14 may start an operation of a load at a time corresponding to the control command or may control an operation of a load through an advance reservation before the time corresponding to the control command.

When each load control device 24a-24n receives a control command from the consumer 14 (step 1), each load control device 24a-24n transmits the received control command to the different load control devices 24a-24n by way of the communication unit 201 (step 2). Next, each load control device 24a-24n checks other load information, recognizes the number of load control devices 24a-24n which have received the control command (step 3), and calculates an operation time of each load by the calculation unit 204 according to any one of the foregoing methods (step 4). In this case, each load control device 24a-24n may calculate the operation time, or a predetermined load control device may perform the calculation, and transmit the result to different load control devices 24a-24n.

When the operation time has not yet arrived (NO in step 5), each load control device 24a-24n waits for a certain time (step 6), and then returns to step 3 to repeatedly perform the process of checking the information of a different load, and when a different load is manipulated, each load control device 24a-24n recalculates an operation time based on the information. Thus, when the operation time has not yet arrived, whenever the number of a load control device 24a-24n to which the control command has been inputted is increased, the operation time is updated. Meanwhile, after the calculated operation time is received, when the operation time arrives (YES in step 5), the device controller 20 operates the respective loads 23a-23n based on a control command, such as a limitation of or increase in designated power from the consumer 14 (step 7).

(3) Method of Calculating Operation Time

Next, a method of calculating an operation time by the calculation unit 204 in order to prevent the loads 23a-23n from operating simultaneously will be described. Calculation of an operation time is performed by the calculation unit 204 of each load control device 24a-24n. Here, for a simple description, it is assumed that a time at which an operation of a first load starts is ts, a time at which operation of all the loads are completed is te, and a time difference between ts and te is tg. As a calculation method, the following pattern may be employed.

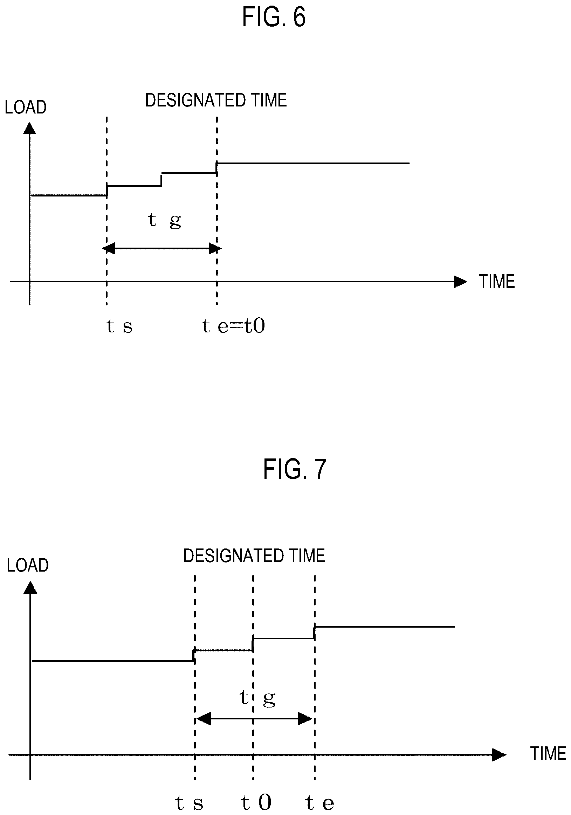

(a) As shown in **FIG. 6,** operation of all the target loads are completed up to a time t0 designated by the management operator of the power system. In this case, te is t0 and ts is faster than t0 by tg.
(b) As shown in **FIG. 7,** the operation of all the target loads are completed within tg before and after a time designated by the management operator of the power system. In this case, ts < t0 < te, and a time difference between te and ts is tg.

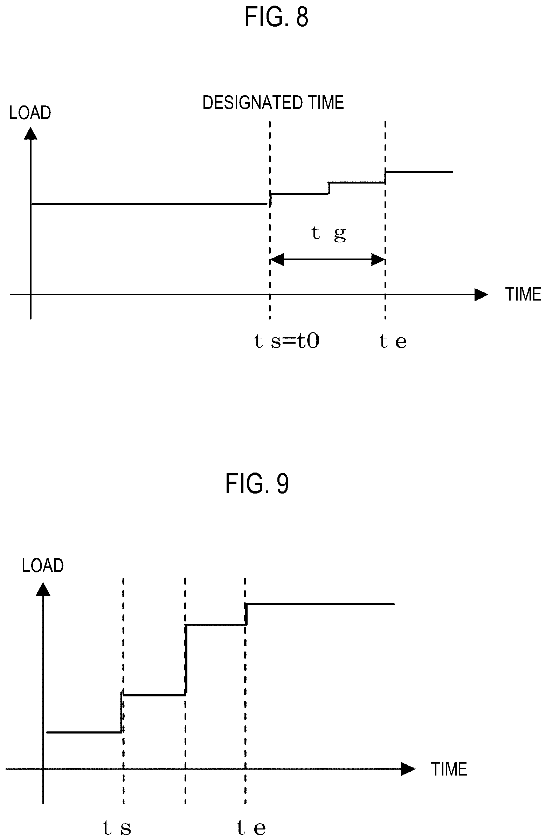

(c) As shown in **FIG. 8,** an operation of the load starts from a time designated by the management operator of the power system. In this case, ts=t0, and te is slower than t0 by tg.

In the present example, any method among the foregoing three patterns may be employed. Also, a certain one type of the patterns in **FIGS. 6** to **8** is not limitedly applied to all consumers. A plurality of types of patterns may be combined to be implemented such that a pattern as shown in **FIG. 6** is applied to a certain consumer while a pattern as shown in **FIG. 7** is applied to another certain consumer.

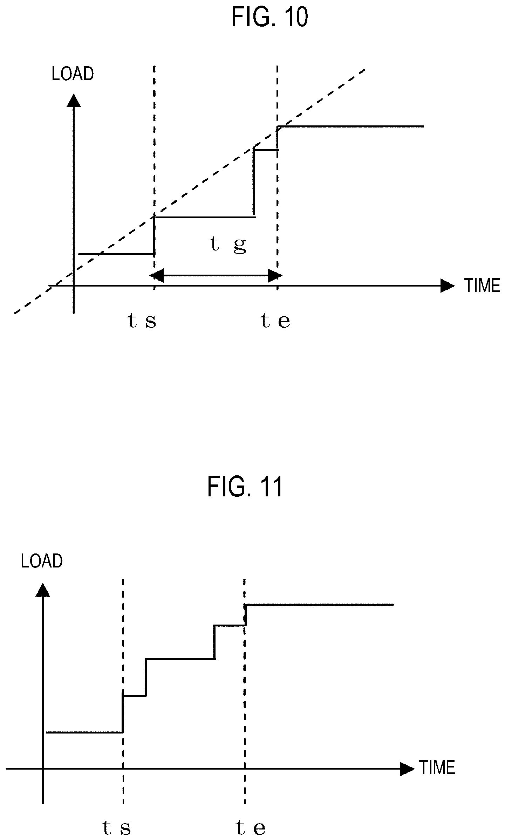

As for a time interval for the second load, and for loads thereafter, there may be a method of operating the loads at equal intervals from the operation start/end time and the number of manipulation target loads as shown in **FIG. 9,** a method of making linear variations of electricity demand by device operations as shown in **FIG. 10,** or a method of operating the loads completely randomly as shown in **FIG. 11.**

When there is one load, it may be operated at a certain time during tg in **FIGS. 6** to **8,** and when there are two loads, they may be allocated to a start time ts and an end time te, or any of them may be moved randomly. However, the present disclosure is not limited to the foregoing methods and any method may be employed as long as it prevents the loads from being operated simultaneously.

In order to calculate the operation time illustrated in **FIG. 10,** a difference Pi of power following the operation of each load and a time width of the operation are used. Meanwhile, regarding a difference of power following the operation of a load, which is changed according to a temperature setting by an air conditioner or the like, the difference may be a difference before and after a response when a temperature setting is changed based on a command. The difference of power may be transmitted to a different load when information is transmitted to the different load, or may be previously registered to a different load.

The operation time is calculated by Eqs. (1) and (2) shown below.

tg: a time duration from a time at which an operation starts to a time at which the operation ends
t: an operation time (a time at which response starts)
Pi: a difference (i is the number of a load) of power following an operation of a load i

(First load)

$$t = 0 \qquad \text{Eq. (1)}$$

(Second load to ith load)

$$t = \frac{\sum_{i=2}^{n} P_i}{\sum_{i=2}^{N} P_i} \times tg \qquad \text{Eq. (2)}$$

The foregoing t is a time at which a response starts. As for an actual time, when the case in which a time is 12:00 and t=5, which are designated according to the method of **FIG. 7** is taken as an example, the load operates at a time which is obtained by adding t to 12:00, i.e., 12:05.

The calculation method in the present example is not limited to **FIGS. 9** to **11** or Eqs. (1) and (2), and any method may be employed as long as it can obtain the same results.

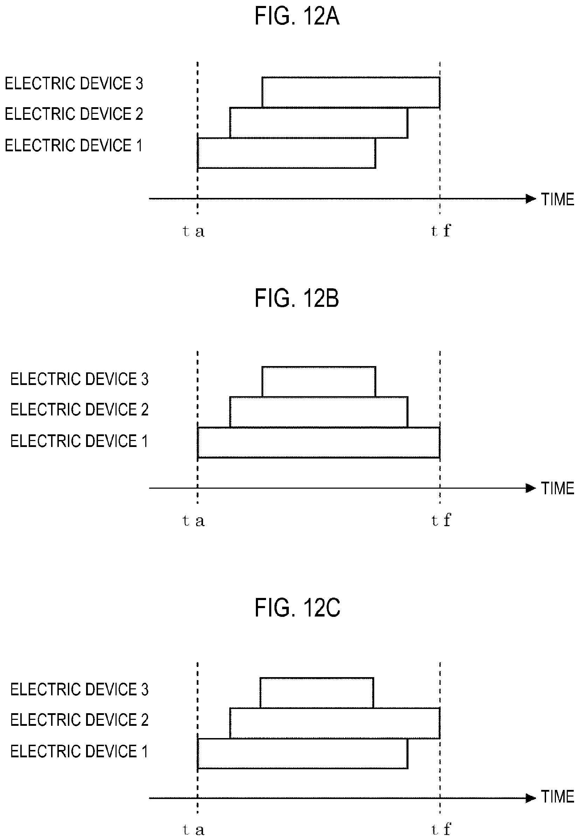

In a state in which each load is manipulated according to the command from the power system management operator, an operation opposite to the command is required, that is, when an operation of a load starts according to a request for increasing power consumption, the operation is necessarily terminated. As for order of the opposite operation, the opposite operations may be performed in the order in which the operations start as shown in **FIG. 12A,** the opposite operations may be performed in reverse order to the order in which the operations start as shown in **FIG. 12A,** or the reverse operations may be performed in a random order, regardless of order as shown in **FIG. 12C.**

In the case of the method of **FIG. 12A,** all the loads respond to the same time and request. In the case of the method of **FIG. 12B,** priority level for responding to a request may be set, and this method is valid for a device which has a low priority level with respect to a response and which wants to respond within a short time.

The foregoing respective calculation methods are examples of the present example and the present disclosure is not limited to the respective methods; any method may be employed as long as it can obtain the same results. For example, loads to be operated in advance, operation order thereof, and operation intervals are determined, and a consumer inputs a control command to a control device of a first load. Thereafter, when a different load control device detects that the first load starts to operate, by the monitoring unit 203, the second or subsequent load may automatically operate.

(Effect)

According to the present example, as shown in **FIGS. 9 to 11,** the loads are prevented from operating simultaneously the instant, or immediately thereafter, a designated time arrives; electricity demand may be reduced to a variation with which the plant 12 managed and operated by the system management device 11 for supplying electricity to the power system 13 can sufficiently respond; and a load change can be restrained to below coordination of an electric generator, such that a degradation of power quality can be restrained.

2. Second Example

(Configuration)

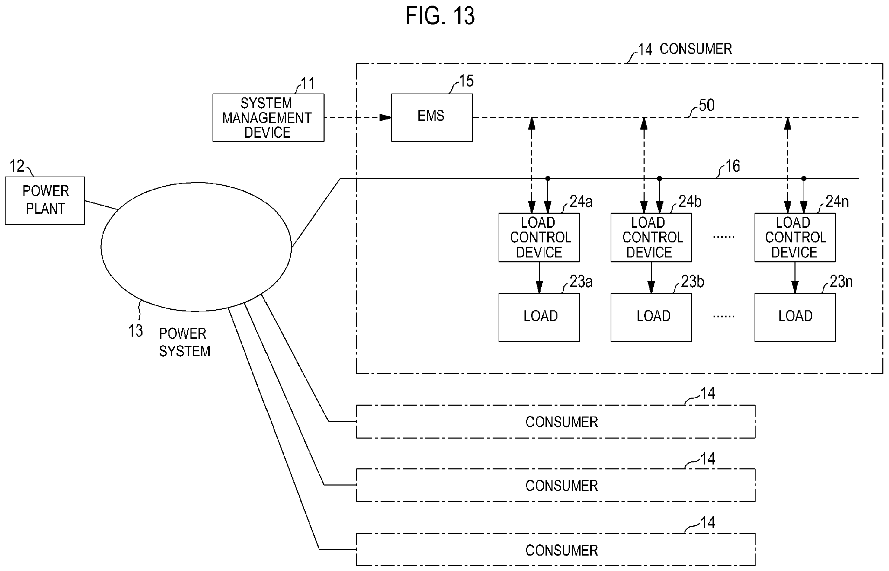

**FIG. 13** is a block diagram showing an overall configuration of a second example of the present disclosure.

In the present example, the consumer 14 includes the EMS 15 and communicates with the load control devices 24a-24n of the respective loads 23a-23n from the system management device 11 and the EMS 15.

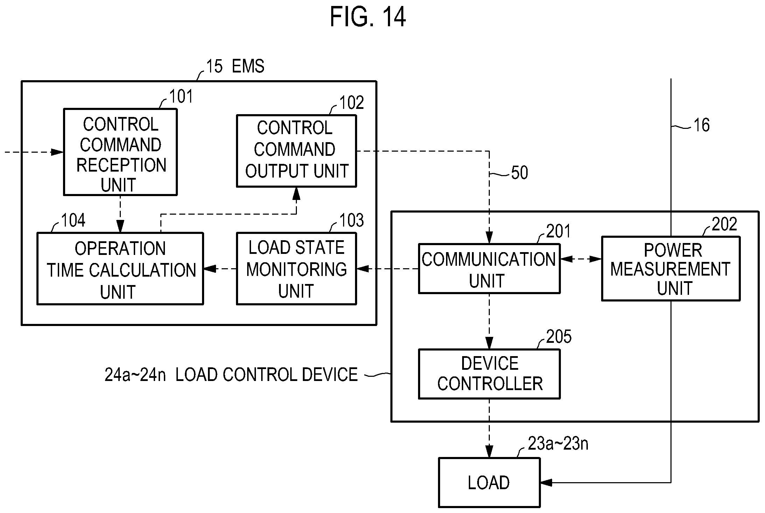

As shown in **FIG. 14,** the EMS 15 according to the present example includes a monitoring unit 103 for monitoring an operation state of different loads 23a-23n and a calculation unit 104 for calculating an operation time of each load 23a-23n, in addition to the reception unit 101 and the output unit 102 for a control command installed in the first example. That is, in the present example, the monitoring unit 203 and the calculation unit 204, which are installed in each load control device 24a-24n installed in the first example, are integrated into the EMS 15.

(Operation)

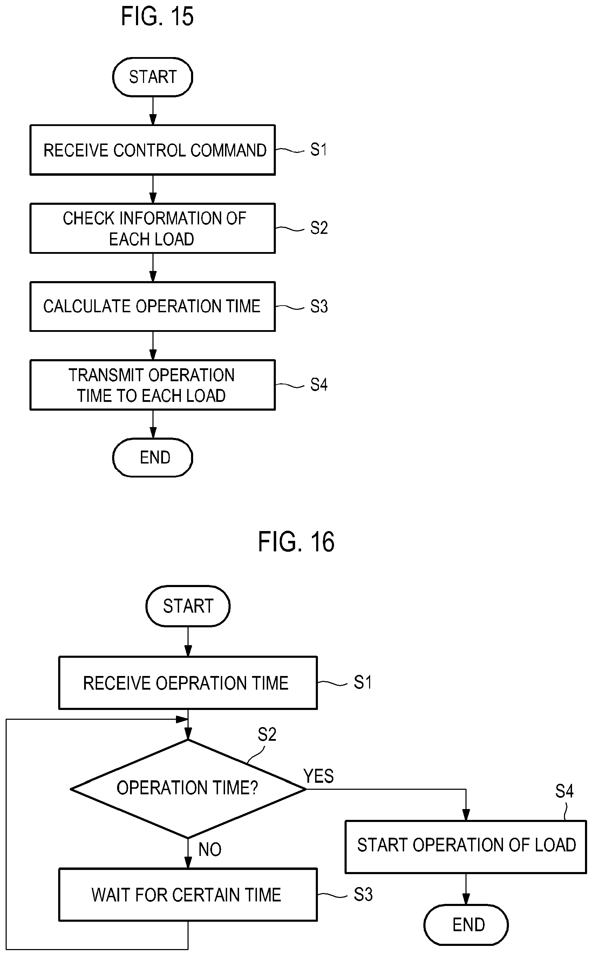

The operation of the present example will be described with reference to the flow chart illustrated in **FIG. 15.** In the present example, a control command for requesting an increase or decrease in power demand is transmitted to the EMS 15 of the consumer 14 from the system management operator. The EMS 15 receives the command by the receiving unit 101 (step 1) and checks an operation state of each load 23a-23n by the monitoring unit 203 (step 2). Thereafter, the calculation unit 104 calculates an operation time by any one of the various methods as described above in the first example (step 3). The operation time of each load 23a-23n as a calculation result of the calculation unit 104 is transmitted to each load control device 24a-24n by way of the output unit 102 (step 4).

Meanwhile, when the EMS 15 constantly recognizes an operation state of each load 23a-23n, "checking of information of each load" in step 2 may be eliminated.

Next, an operation of each load control device 24a-24n will be described with reference to **FIG. 16.**

Each load control device 24a-24n receives an operation time thereof by the communication unit 201 (step 1). When an operation time has not yet arrived (NO in step 2), each load control device 24a-24n waits for a certain time (step 3), and then, the process returns to step 2.

In the interim, the EMS 15 repeatedly performs the process of checking information regarding a different load again, and when a different load receives a manipulation, the EMS 15 recalculates an operation time based on the information. Thus, if the operation time does not arrive yet, the operation time is updated whenever the number of load control device 24a-24n to which a control command is input is increased. This is the same as the first example. However, when the EMS 15 recognizes which of the loads 23a-23n is a control target in advance, since the number of loads is not changed, an operation time of each load 23a-23n is also determined by an initial calculation. In this case, each load control device 24a-24n waits until the initially received operation time arrives.

A load as a control target may be registered in advance in the EMS 15 and the same load may be a control target each time, or a target load may be checked whenever a control command is received.

Meanwhile, after the operation time calculated by the EMS 15 is received, when the operation time arrives (YES in step 2), each load control device 24a-24n operates the loads 23a-23n according to a control command such as a limitation or an increase of designated power in the consumer 14 by the device controller 205 (step 4).

(Effect)

According to the present example, like the first example, the loads are prevented from operating simultaneously the instant, or immediately thereafter, the designated time arrives. In addition, compared to the first example, the configuration of each load control device 24a-24n is simplified and it is not required that each load control device 24a-24n calculates an operation time and transmits the calculation result to different load control devices 24a-24n. Also, since automatic controlling is performed by the EMS 15, inputting a control command to each load control device 24a-24n by the consumer 14 is not necessary, and thus, the operation of each load 23a-23n can be reliably performed at an appropriate timing.

3. Third Example

(Configuration)

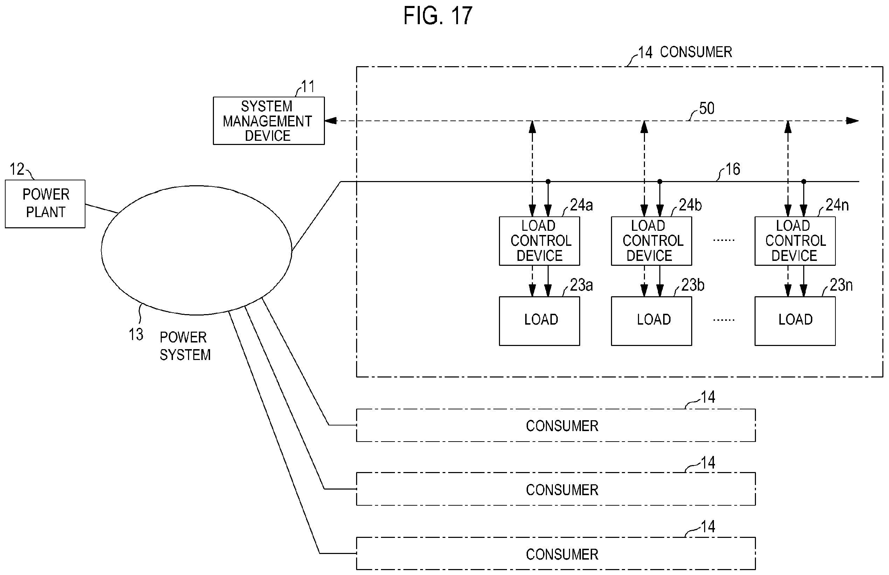

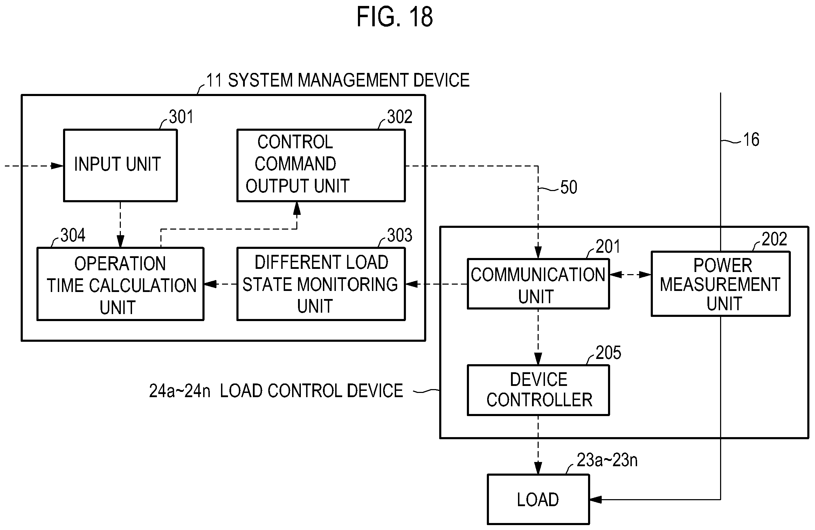

A third example will be described with reference to **FIGS. 17** and **18.** In the third example, an operation time calculation unit of each load 23a-23n is installed in the system management device 11. Thus, as shown in **FIG. 17,** the system management device 11 is connected to each load control device 24a-24n of the consumer 14 by the communication line 50, and each consumer 14 does not have an EMS 15 as in the second example.

As shown in **FIG. 18,** the system management device 11 of the present example includes a monitoring unit 303 for monitoring an operation state of each load control device 24a-24n of each consumer and a calculation unit 304 for calculating an operation time of each load 23a-23n, in addition to the input unit 301 and the output unit 302 of a control command. That is, in the present example, the monitoring unit 203 and the calculation unit 204 installed in each load control device 24a-24n in the first example are integrated in the system management device 11.

(Operation)

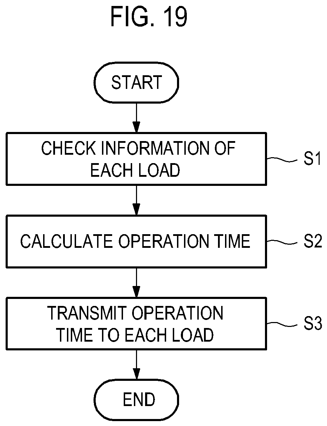

An operation of the present example will be described with reference to a flow chart illustrated in **FIG. 19.** In the present example, when a control command requesting an increase or decrease of power demand is inputted to the input unit 301 of the system management device 11 from the system management operator, the system management device 11 checks information regarding each load 23a-23n in the load state monitoring unit 303 (step 1).

That is, when information regarding which of the loads 23a-23n the consumer 14 is to execute a control command, information regarding what order the consumer 14 operates the loads, and the like are stored in each load control device 24a-24n, such information is obtained from each load control device 24a-24n. Simultaneously, an operation state of each load 23a-23n is recognized from the power measurement unit 202 installed in each load control device 24a-24n. In this case, when such information has been previously transmitted to the system management device 11 from each consumer 14, "checking of information of each load" in step 1 may be eliminated.

After the state of each load 23a-23n is checked, the calculation unit 304 of the system management device 11 calculates an operation time of each load 23a-23n by any one of the various methods as described above in the first example (step 2). The calculation result obtained by the calculation unit 304 is transmitted to each load control device 24a-24n by way of the output unit 302 (step 3).

Upon receipt of the result, each load control device 24a-24n executes an operation such as decreasing or increasing power at a designated time with respect to each load 23a-23n managed by itself. In this case, the process is the same as the flow chart illustrated in **FIG. 16** of the second example.

In the present example, processing without consideration of the operation status of each load 23a-23n may also be possible. In this case, the "checking of information regarding each load" described in **FIG. 19** is omitted, and an operation time is calculated on the assumption that all the loads as requested targets are stopped or in operation.

For example, when a command for increasing power consumption is issued, an operation time is calculated on the assumption that the loads 23a-23n as requested targets are all stopped. Then, the result is transmitted to the loads 23a-23n, and when a target load is stopped, the load transitions from the stop state to an operation state in response to the request signal, and when a target load is in operation, a response is not made despite receiving a request signal, since the target load is already in operation.

According to the present example, besides the obtaining of the effect like that of the first example, the configuration of the respective loads and control devices is simplified more than those of the first example. Also, there is no need to install the EMS 15 in every consumer. In addition, since all information and the calculation unit is integrated in the system management device 11 and every load is operated according to the intention of the system management operator, a degradation of power quality can be further restrained.

4. Fourth Example

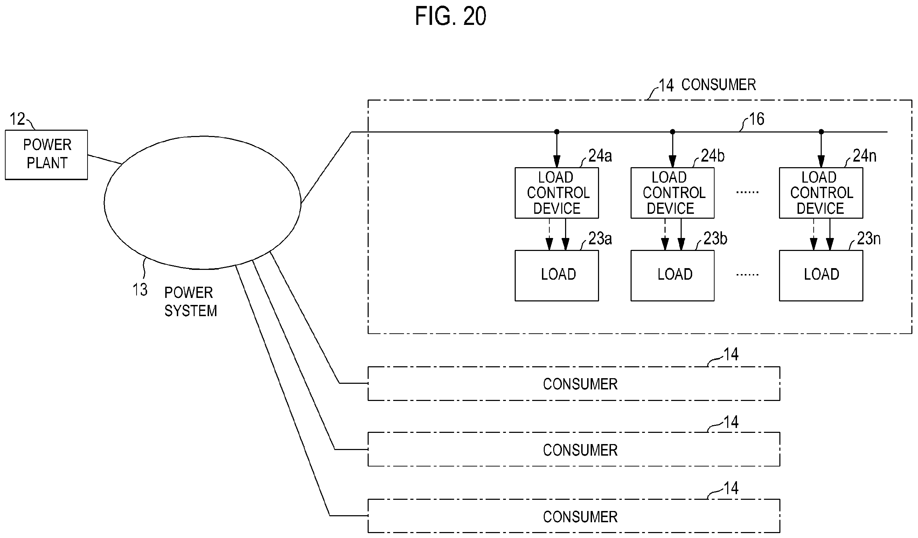

A fourth example will be described with reference to **FIG. 20.** In the present example, the system management device 11 and the EMS 15 are eliminated, and a control command from the system management operator is transmitted to the consumer 14 through a phone, mail, facsimile, written notification, such as documents, or the like, and based on the control command, the consumer 14 directly inputs a control command to each load control device 24a-24n.

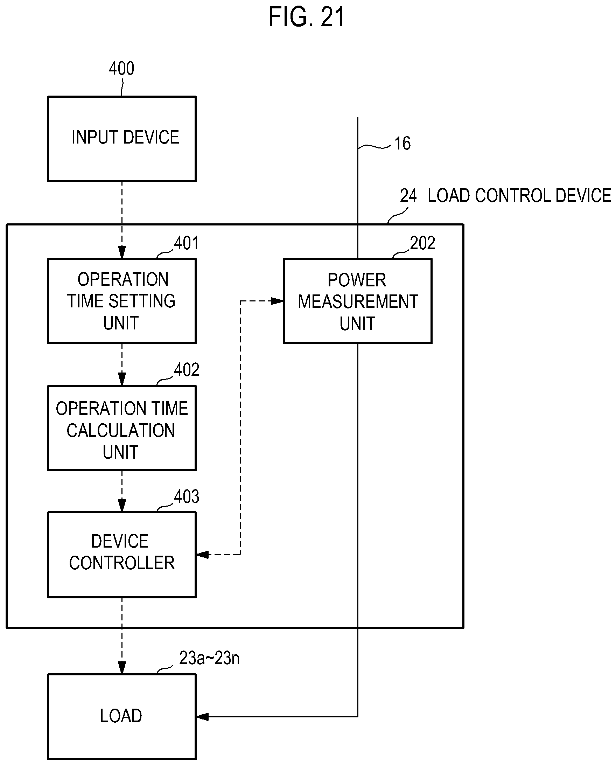

As shown in **FIG. 21,** each load control device 24a-24n of the present example is connected to an input device 400, such as a keyboard, a storage device, etc., manipulated by the consumer 14. Each load control device 24a-24n includes an operation time setting unit 401 connected to the input device 400 and an operation time calculation unit 402 connected to the operation time setting unit 401. When the consumer 14 inputs a designated time in a control command to the setting unit 401, the calculation time 402 calculates an operation time of each load 23a-23n based on the designated time.

As a calculation method of the calculation unit 402, a method that does not refer to a state of a different load, among the calculation methods described in the respective examples, may be used. For example, a method of setting a random number in each device until a product is launched, and employing a time obtained by adding the random number to an operation designated time, as an operation time, may be used. Also, an operation time unique to a load may be set until a product is launched without setting it to the consumer. In this case, the set operation time is distributed within tg so as to avoid simultaneous operations. Further, the present example is not limited to the foregoing method and any method may be employed as long as a set value is automatically corrected to prevent simultaneous operations.

(Operation and Effect)

In the present example, an operation time is set in advance in each load 23a-23n, and when the operation time arrives, each load 23a-23n is operated. In this case, the time set by the consumer 14 is automatically corrected by the calculation unit 403 installed in each load control device 24a-24n such that it is different for each load 23a-23n. Accordingly, the plurality of loads can be prevented from operating simultaneously.

This example is valid when operated, in particular, at a determined day and time, such as 11:00 to 13:00 on weekdays. In addition, according to the present example, the system configuration is simpler in comparison to the foregoing respective examples.

5. Fifth Example

(Configuration)

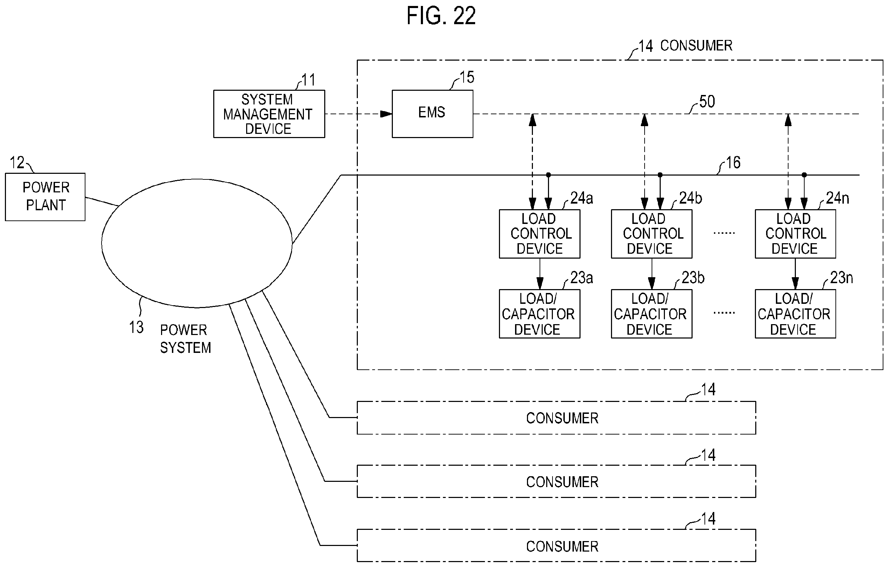

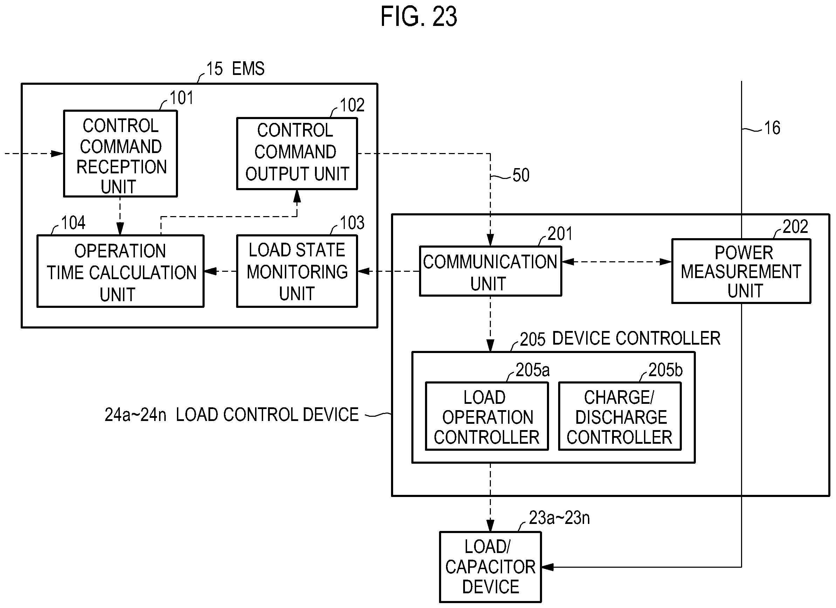

A fifth example will be described with reference to **FIGS. 22** to **25.** In the present example, some or all of the loads 23a-23n are configured as loads and capacitor devices for storing or discharging power in any one of the first to fourth examples. **FIG. 22** shows an application of the fifth example to the configuration in which the EMS 15 of the second example is installed in each consumer 14, but the fifth example is not limited to **FIG. 22.**

The load and capacitor devices may include an emergency capacitor device installed in homes, hospitals, plants or the like, or a capacitor device which serves as a load in case of charging and outputs power charged in a battery to a consumer or a system in case of discharging, such as an electric automotive, or houses or plants having a photovoltaic generating panel and a capacitor device.

In the fifth example, the power measurement unit 202 may measure a power usage amount of the load and capacitor device, an amount of charging or discharging power, or a power storage amount of the capacitor device, as necessary. Also, the device controller 205 of each load control device 24a-24n includes a load operation controller 205a and a charge/discharge controller 205b of the capacitor device. The charge/discharge controller 205 controls the capacitor device based on each operation time set by the calculation unit 104 of the EMS 15 as a start point, as follows.

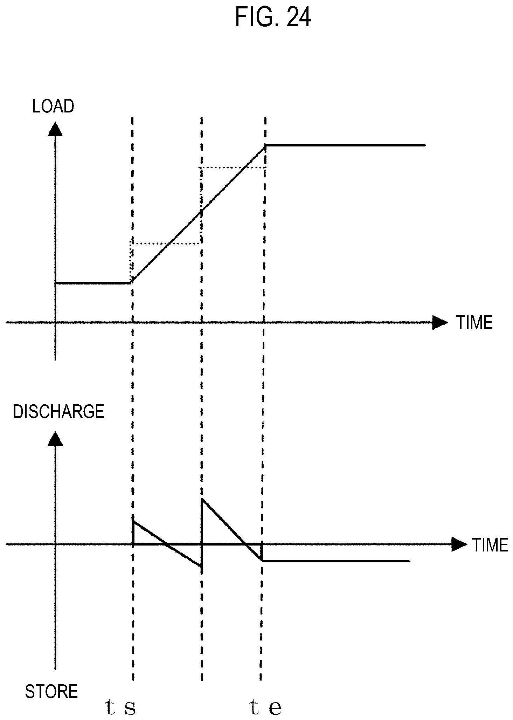

(1) As shown in **FIG. 24,** in order to make a gentle power flow of connection points with the power system 13 from ts to te, an amount of discharge of the capacitor device is controlled such that the amount of discharge is increased when each load 23a-23n starts to operate, and then, sequentially reduced when subsequent loads start to operate to obtain an uneven saw-tooth stripe shape from ts to te.

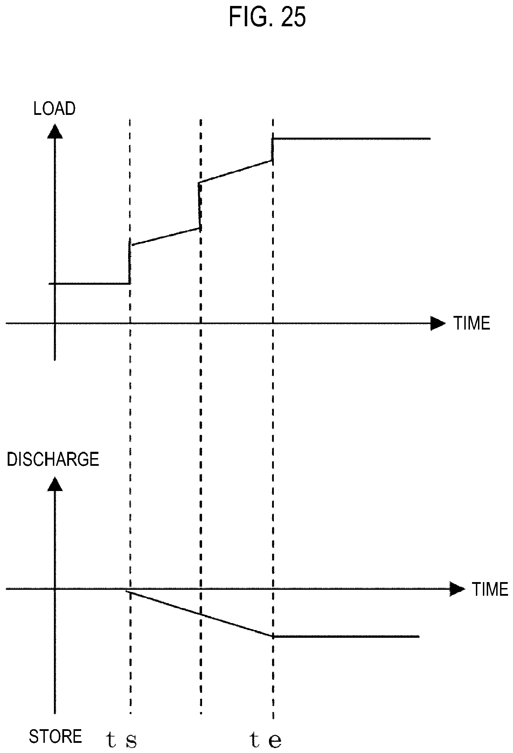

(2) As shown in **FIG. 25,** only an output of the capacitor device is gently reduced between ts at which the first load starts to operate and te at which an operation of the last load is completed. In such case, a power flow at the connection points has a stepwise shape from ts to te.

(Operation and Effect)

According to the present example, an operation start time of each load 23a-23n can be slightly moved, and the following operational effects can be obtained by controlling charging and discharging of the capacitor device.

For example, according to (1), a difference between power demand changing stepwise due to operations of different devices and an output command value having a gentle flow of connection points can be supplemented by an output of a device that can store or discharge power, whereby the flow of the connection points can have a sloped shape. In (2), by allowing only an output of a device that can store or discharge power to have a sloped shape, a variation due to the device that can store or discharge power can be reduced.

As described above, according to the present example, the capacitor device capable of storing or discharging power can be used to further restrain a change, in addition to the effects of the foregoing respective examples.

6. Sixth Example

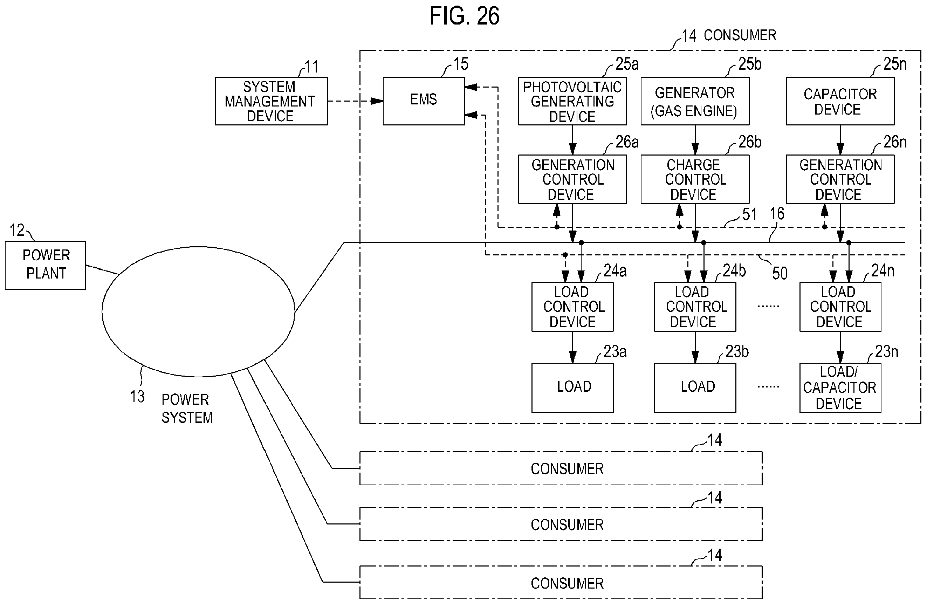

A sixth example will be described with reference to **FIGS. 26** to **29**. In this example, a generating device is installed by adding loads 23a-23n to a power line 16 extending from a system 13 in any one of the first to fifth examples. **FIG. 26** shows an application of the present example to the configuration in which the EMS 15 is installed in each consumer 14, but the present example is not limited to **FIG. 26.**

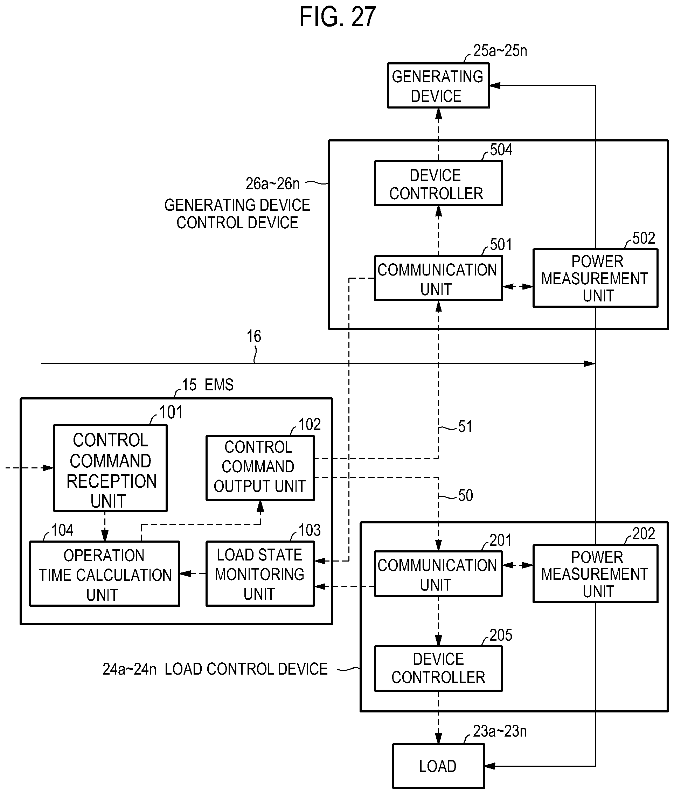

A photovoltaic generating device 25a, a gas engine generator 25b, a water-turbine generator, a wind generator, or the like may be used as the generating device. Generation control devices 26a-26n are installed in the respective generating devices 25a-25n. As shown in **FIG. 27,** the generating devices 25a-25n include a communication unit 501 for communicating with the EMS 15, a power measurement unit 502 for detecting an operation state of the generating devices 25a-25n, and a device controller 504. The device controller 504 controls the operation of the respective generating devices 25a-25n based on an operation time transmitted from the operation time calculation unit 104 of the EMS 15.

(Operation and Effect)

In case of a generator in which an output can be freely changed, such as a gas engine generator or the like, a variation can be reduced by gently changing an output, like the device which can store or discharge power as described in the fifth example.

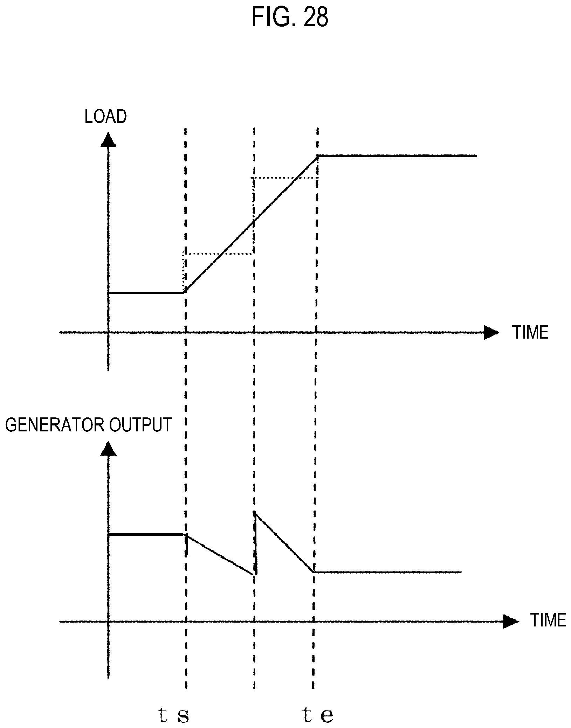

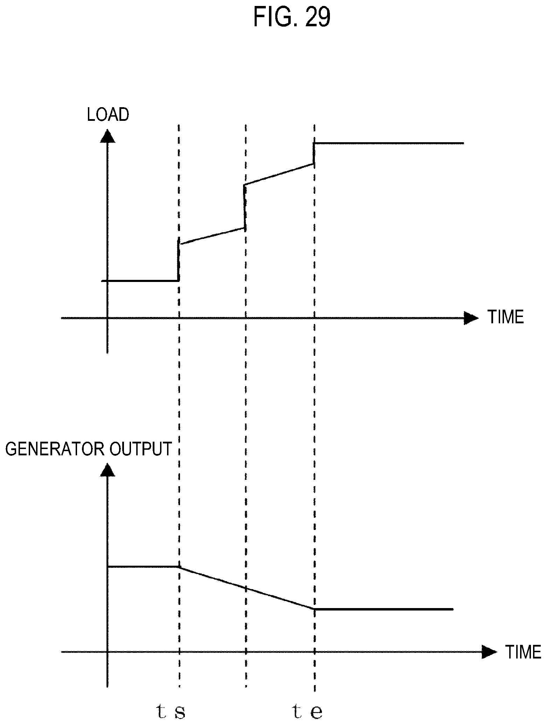

Specifically, a flow of connection points can have a sloped shape by supplementing a difference with the output command value such as the case in which the flow of the connection points is gentle, as shown in **FIG. 28,** by an output of the generating device, or a variation of power in case of starting an operation of decreasing or increasing a plurality of loads is reduced by making only an output of the generating device have a sloped shape as shown in **FIG. 29.** This may be an operation of adding a bias to the output of the device that can store or discharge power as described in the fifth example.

Meanwhile, the generator whose output cannot be freely changed, like the photovoltaic generating device, basically has a movement like the loads 23a-23n described in the first to fourth examples. A generator whose output cannot be freely changed refers to a generator uncertain about obtaining a desired output, but even for this generator, power desired to be initially generated can be reduced through controlling. That is, in case of a combination of a device whose power consumption is increased as an operation starts or as an output is increased and a device whose supply power is reduced as an operation is stopped or an output is reduced, the devices can be simultaneously operated.

For example, when a command for increasing a load is received from the power system management operator, a new load consuming power is operated or loads are operated to increase output and, simultaneously, an output of a generator whose output cannot be freely changed is limitedly reduced. Here, in the first to fourth examples, a single operation is performed basically, but in case of the combination of the load consuming power and the device generating power as in the present example, since variations according to operations are canceled out, they can be simultaneously manipulated.

In other words, in case of calculating an operation time, an operation time is calculated excluding the generating device, and thereafter, the device may be operated at a certain timing included in a plurality of calculated operation times. When the devices are simultaneously operated, a variation corresponding to a single operation can be reduced.

According to the present example, the device for generating power can be used in addition to the effects of the respective examples and, thus, a more flexible system can be established.

7. Embodiment

(Configuration)

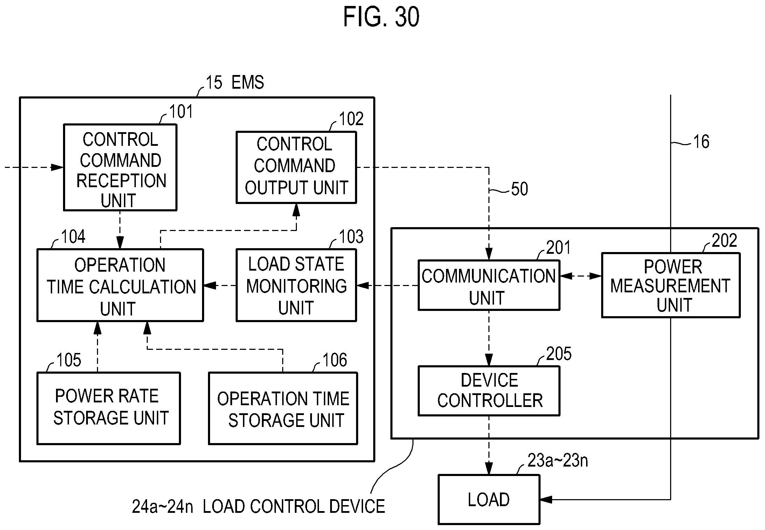

An embodiment will be described with reference to **FIG. 30.** In the present embodiment, the operation time is calculated while considering power rates in any one of the first to sixth examples. **FIG. 30** shows an application of the present embodiment to the configuration in which the EMS 15 is installed in each consumer 14, but the present embodiment is not limited to **FIG. 30.**

To this end, in the present embodiment, a power rate storage unit 105 is installed in the EMS 15, and power rates regarding the respective loads 23a-23n are stored in the storage unit 105. Since power rates are different according to a power usage time or a season, such as midnight electric power, seasonal power or the like, an operation time storage unit 106 for storing an operation schedule time of each load 23a-23n is installed. In addition, an operation time calculation unit 104 calculates an operation time of each load 23a-23n while considering a power rate and an operation time as described hereinafter, in addition to information regarding an operational state of each load 23a-23n or the presence or absence of a control command.

(Operation and Effect)

For example, when a power rate is changed over time, a consumer may suffer from a disadvantage as a load does not operate at a scheduled time. In order to prevent this, in the present embodiment, an operation time is calculated as follows.

First, a temporary operation time is calculated according to Eqs. (1) and (2) described in the first example. And it is assumed that a power rate before the time tc at which the power rate is changed is Pp, and a power rate after the tc is Pa. Here, it is assumed that five devices respond, power consumption of the loads 23a-23e is Xa-Xe, and a temporary response time is Ta-Te.

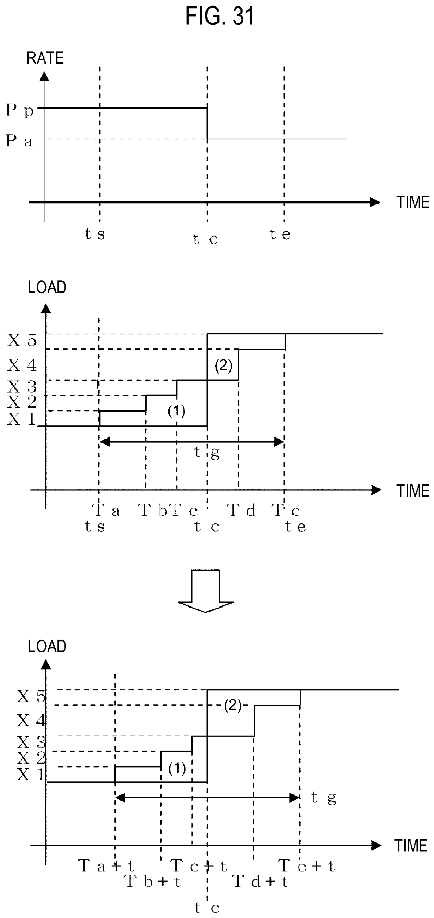

In **FIG. 31,** in a portion (1), the loads are operated early during a time duration in which a power rate is high, and in a portion (2), the loads are operated late during a time duration in which the power rate is low. That is, in (1), the power rate is higher than the case in which the loads are operated simultaneously, and in (2), the power rate is lower than the case in which the loads are operated simultaneously because a time duration in which the loads are operated is shortened.

The sums of power rates are equal before and after the power rates are changed, when a value obtained by multiplying Pp to the area of (1) and a value obtained by multiplying Pa to the area of (2) are equal. Thus, the difference between the two is made to 0 by delaying a response time by a time t while maintaining the time interval of the temporary response time Ta-Te.

A power rate of the device which respond before the power rate is changed may be expressed by Eq. (3) below:

$$P_p \times \sum_{n=a}^{c} \int_{T_n+t}^{t_c} X_n \cdot (t_c - (T_n + t))dt \qquad \text{Eq. (3)}$$

A power rate of the device which respond after the power rate is changed may be expressed by Eq. (4) below:

$$P_p \times \sum_{n=d}^{e} \int_{T_n+t}^{t_c} X_n \cdot (t_c - (T_n + t - t_c))dt \qquad \text{Eq. (4)}$$

The correction time t can be obtained by solving an equation of (3)=(4). And then, t is added to the temporary response time Ta-Te to correct it to obtain a formal response time. Also, when a load responds, the reverse operation is executed. Also, in such case, the same calculation as described above can be executed to correct a response time.

According to the foregoing method, a power rate difference is gone whenever each operation is performed, but it is also possible that a power rate difference is generated at each time as a constraint condition that a power rate difference is gone within a certain period of time like, for example, a week, and the power rate difference becomes 0 up to the last time of the period.

According to the present embodiment having the foregoing configuration, a disadvantage of paying a higher rate than a power rate determined in the related art can be avoided despite the power rate being changed over time, and the effects of the respective embodiments is also obtained.

8. Other Embodiments

The present disclosure is not limited to the respective embodiments but also include the following embodiments.

(1) In the foregoing respective embodiments, the present disclosure is described as a system for controlling an operation of an electric device, but a program for functioning the operation control method executed in the present system, or a computer as an operation control device of an electric device, is also an aspect of the present disclosure.
(2) When a plurality of consumers are integrated, the consumers may be grouped such that demand for power loads is equal in each group, the configuration of a power device is equal in each group, or the characteristics of the loads are equal in each group.
(3) The system management device 11, the EMS 15, the load control devices 24a-24n, and the generating devices 25a-25n may be configured to be divided as long as the same function can be obtained.
(4) The present disclosure is not limited to the foregoing embodiments, and the components may be modified to be embodied within a range that does not divert from the present disclosure in an implementation stage. Also, various inventions may be formed by appropriately combining a plurality of components disclosed in the foregoing embodiments. For example, some of the components disclosed in the embodiments may be deleted. In addition, components of other embodiments may be appropriately combined.

While certain embodiments have been described, these embodiments have been presented by way of example only, and are not intended to limit the scope of the disclosures. Indeed, the novel methods and apparatuses described herein may be embodied in a variety of other forms; furthermore, various omissions, substitutions and changes in the form of the embodiments described herein may be made without departing from the disclosures. The accompanying claims and their equivalents are intended to cover such forms or modifications as would fall within the scope of the disclosures.

**Claims**

1.  A system for controlling an electric device operation comprising:

a plurality of loads (23a-23n) managed by a consumer associated with a power system;
a plurality of control devices (24a-24n) for controlling an operation of the loads (23a-23n);
**characterized by**:

an operation time calculation unit (104) configured to calculate a start time of an operation of increasing or decreasing power received from the plurality of loads (23a-23n) based on a control command for requesting an increase or decrease of power received from the power system such that the start time is different for each of the loads (23a-23n);
a power rate storage unit (105) for storing power rates related to the loads (23a-23n); and
an operation time storage unit (106) for storing an operation schedule time of the loads (23a-23),
the operation time calculation unit (104):

calculates an operation time of each load (23a-23n) and a temporary response time (Ta-Te) of the loads (23a-23n) based on the power rate stored in the power rate storage unit (105) ;
calculates a correction time (t) to equalize the sums of power rates before and after the power rates are changed while maintaining the time interval of the temporary response time (Ta-Te), based on the temporary response time (Ta-Te) of the loads (23a-23n), the time (tc) at which the power rate is changed, a power rate (Pp) before the time (tc) at which the power rate is changed, and a power rate (Pa) after the time (tc) at which the power rate is changed; and
obtains a formal response time of the loads (23a-23n) by adding the correction time (t) to the temporary response time (Ta-Te).

2.  The system of Claim 1, wherein each of the control devices comprises:

a communication unit (201) configured to exchange information with a load connected to a different control device; and
an operation state monitoring unit (203) configured to monitor an operation state of the load connected to a different control device and/or to check whether or not a control command has been inputted to each control device (24a-24n) ;
wherein the operation time calculation unit (104) calculates an operation time of each of the loads based on the information obtained from the monitoring unit and the control command.

3. The system of Claim 1, wherein the consumer comprises an energy management device for managing an operation of the plurality of loads, and
wherein the energy management device comprises:

a communication unit configured to exchange information between the respective loads; and
an operation state monitoring unit configured to monitor an operation state of the respective loads and/or an input state of the control command of each of the loads, and
wherein the operation time calculation unit (104) calculates an operation time of each of the loads based on the information obtained from the monitoring unit and the control command.

4. The system of Claim 1, wherein a system management device for controlling an operation of each of the loads connected to the power system is installed in the power system, and
wherein the system management device comprises:

a communication unit configured to exchange information between the respective loads; and
an operation state monitoring unit configured to monitor an operation state of each of the loads and/or an input state of the control command of each of the loads, and
wherein the operation time calculation unit (104) calculates an operation time of each of the loads based on the information obtained from the monitoring unit and the control command.

5. The system of Claim 1, wherein each of the control devices comprises
an operation time setting unit configured to input a control command to each of the loads by a consumer, and
wherein the operation time calculation unit (104) calculates an operation time of each of the loads based on the control command input to the operation time setting unit.

6. The system of any one of Claims 1 to 5, wherein:

at least one of the loads is configured as a load and a capacitor device, wherein the capacitor device is capable of storing or discharging power,
the control device comprises a load operation controller and a capacitor device operation controller,
the operation time calculation unit (104) calculates an operation start time of the load and the capacitor device based on the control command, and
the load operation controller and the capacitor device operation controller control an operation of the load and the capacitor device based on the calculation result.

7. The system of any one of Claims 1 to 6, wherein a generating device is connected together with the load to the power system, and
wherein the generating device comprises a generation control device configured to control an operation of the generating device, and
the operation time calculation unit (104) calculates an operation start time of the load and an operation control time of the generating device based on the control command, and an operation controller of the load and an operation controller of the generating control device control an operation of the load and the generating device based on the calculation result.

8. A method for controlling an electric device operation in a system comprising:

a plurality of loads (23a-23n) managed by a consumer associated with a power system;
a plurality of control devices (24a-24n) for controlling an operation of the loads (23a-23n) the method comprising the steps of:

storing, in a power rate storage unit (105), power rates related to the loads (23a-23n) connected to the power system and storing an operation schedule time of the loads (23a-23) in an operation time storage unit (106);
calculating an operation time of each load (23a-23n) and a temporary response time (Ta-Te) of the loads (23a-23n) based on a power rate stored in the power rate storage unit (105) ;

calculating a correction time (t) to equalize the sums of power rates before and after the power rates are changed while maintaining the time interval of the temporary response time (Ta-Te), based on the temporary response time (Ta-Te) of the loads (23a-23n), the time (tc) at which the power rate is changed, a power rate (Pp) before the time (tc) at which the power rate is changed, and a power rate (Pa) after the time (tc) at which the power rate is changed; and

obtaining a formal response time of the loads (23a-23n) by adding the correction time (t) to the temporary response time (Ta-Te).

**Patentansprüche**

1. System zur Steuerung des Betriebs einer elektrischen Vorrichtung, das Folgendes umfasst:

mehrere Lasten (23a bis 23n), die durch einen Verbraucher verwaltet werden, der einem Leistungssystem zugehörig ist;

mehrere Steuerungsvorrichtungen (24a bis 24n) zum Steuern eines Betriebs der Lasten (23a bis 23n); **gekennzeichnet durch**:

eine Betriebszeit-Berechnungseinheit (104), die ausgestaltet ist, um eine Anfangszeit eines Betriebs zur Erhöhung oder Verringerung der von den mehreren Lasten (23a bis 23n) empfangenen Leistung basierend auf einem Steuerungsbefehl zum Anfordern einer Erhöhung oder Verringerung der von dem Leistungssystem empfangenen Leistung zu berechnen, derart, dass die Anfangszeit sich für jede von den Lasten (23a bis 23n) unterscheidet;

eine Leistungsraten-Speicherungseinheit (105) zum Speichern von Leistungsraten, die die Lasten (23a bis 23n) betreffen; und

eine Betriebszeit-Speicherungseinheit (106) zum Speichern einer Betriebsplanzeit der Lasten (23a bis 23), wobei die Betriebszeit-Berechnungseinheit (104):

eine Betriebszeit von jeder Last (23a bis 23n) und eine vorübergehende Reaktionszeit (Ta bis Te) der Lasten (23a bis 23n) basierend auf der in der Leistungsraten-Speicherungseinheit (105) gespeicherten Leistungsrate berechnet;

eine Korrekturzeit (t) zum Ausgleichen der Summen von Leistungsraten, bevor und nachdem die Leistungsraten geändert werden, unter Beibehaltung des Zeitintervalls der vorübergehenden Reaktionszeit (Ta bis Te) basierend auf der vorübergehenden Reaktionszeit (Ta bis Te) der Lasten (23a bis 23n), dem Zeitpunkt (tc), an dem die Leistungsrate geändert wird, einer Leistungsrate (Pp) vor dem Zeitpunkt (tc), an dem die Leistungsrate geändert wird, und einer Leistungsrate (Pa) nach der Zeitpunkt (tc), an dem die Leistungsrate geändert wird, berechnet; und

eine formale Reaktionszeit der Lasten (23a bis 23n) durch Addieren der Korrekturzeit (t) zur vorübergehenden Reaktionszeit (Ta bis Te) erhält.

2. System nach Anspruch 1, wobei jede von den Steuerungsvorrichtungen Folgendes umfasst:

eine Kommunikationseinheit (201), die ausgestaltet ist, um Informationen mit einer Last auszutauschen, die mit einer unterschiedlichen Steuerungsvorrichtung verbunden ist; und

eine Betriebszustandsüberwachungseinheit (203), die ausgestaltet ist, um einen Betriebszustand der mit einer unterschiedlichen Steuerungsvorrichtung verbundenen Last zu überwachen und/oder zu überprüfen, ob ein Steuerungsbefehl in jede Steuerungsvorrichtung (24a bis 24n) eingegeben wurde oder nicht;

wobei die Betriebszeit-Berechnungseinheit (104) eine Betriebszeit von jeder von den Lasten basierend auf den von der Überwachungseinheit erhaltenen Informationen und dem Steuerungsbefehl berechnet.

3. System nach Anspruch 1, wobei der Verbraucher eine Energieverwaltungsvorrichtung zum Verwalten eines Betriebs der mehreren Lasten umfasst, und

wobei die Energieverwaltungsvorrichtung Folgendes umfasst:

eine Kommunikationseinheit, die ausgestaltet ist, um Informationen zwischen den jeweiligen Lasten auszutauschen; und

eine Betriebszustandsüberwachungseinheit, die ausgestaltet ist, um einen Betriebszustand der entsprechenden Lasten und/oder einen Eingabezustand des Steuerungsbefehls von jeder von den Lasten zu überwachen, und wobei die Betriebszeit-Berechnungseinheit (104) eine Betriebszeit von jeder von den Lasten basierend auf den von der Überwachungseinheit empfangenen Informationen und dem Steuerungsbefehl berechnet.

4. System nach Anspruch 1, wobei eine Systemverwaltungsvorrichtung zum Steuern eines Betriebs von jeder von den Lasten, die mit dem Leistungssystem verbunden sind, in dem Leistungssystem eingerichtet ist, und wobei die Systemverwaltungsvorrichtung Folgendes umfasst:

eine Kommunikationseinheit, die ausgestaltet ist, um Informationen zwischen den jeweiligen Lasten auszutauschen; und
eine Betriebszustandsüberwachungseinheit, die ausgestaltet ist, um einen Betriebszustand von jeder von den Lasten und/oder einen Eingabezustand des Steuerungsbefehls von jeder von den Lasten zu überwachen, und wobei die Betriebszeit-Berechnungseinheit (104) eine Betriebszeit von jeder von den Lasten basierend auf den von der Überwachungseinheit erhaltenen Informationen und dem Steuerungsbefehl berechnet.

5. System nach Anspruch 1, wobei jede von den Steuerungsvorrichtungen Folgendes umfasst:

eine Betriebszeit-Einstellungseinheit, die ausgestaltet ist, um einen Steuerungsbefehl in jede der Lasten durch einen Verbraucher einzugeben, und
wobei die Betriebszeit-Berechnungseinheit (104) eine Betriebszeit von jeder von den Lasten basierend auf dem in die Betriebszeit-Einstellungseinheit eingegebenen Steuerungsbefehl berechnet.

6. System nach einem der Ansprüche 1 bis 5, wobei:

mindestens eine von den Lasten als eine Last und eine Kondensatorvorrichtung ausgestaltet ist, wobei die Kondensatorvorrichtung in der Lage ist, Leistung zu speichern oder zu entladen,
die Steuerungsvorrichtung eine Lastbetrieb-Steuereinrichtung und eine Kondensatorvorrichtungsbetriebssteuereinrichtung umfasst,
die Betriebszeit-Berechnungseinheit (104) eine Betriebsanfangszeit der Last und der Kondensatorvorrichtung basierend auf dem Steuerungsbefehl berechnet, und
die Lastbetriebssteuereinrichtung und die Kondensatorvorrichtungsbetriebssteuereinrichtung einen Betrieb der Last und der Kondensatorvorrichtung basierend auf dem Berechnungsergebnis steuern.

7. System nach einem der Ansprüche 1 bis 6, wobei eine Erzeugungsvorrichtung zusammen mit der Last mit dem Leistungssystem verbunden ist, und
wobei die Erzeugungsvorrichtung eine Erzeugungssteuerungsvorrichtung umfasst, die ausgestaltet ist, um einen Betrieb der Erzeugungsvorrichtung zu steuern, und
die Betriebszeit-Berechnungseinheit (104) eine Betriebsanfangszeit der Last und eine Betriebssteuerungszeit der Erzeugungsvorrichtung basierend auf dem Steuerungsbefehl berechnet und eine Betriebssteuereinrichtung der Last und eine Betriebssteuereinrichtung der Erzeugungssteuerungsvorrichtung einen Betrieb der Last und der Erzeugungsvorrichtung basierend auf dem Berechnungsergebnis steuern.

8. Verfahren zur Steuerung des Betriebs einer elektrischen Vorrichtung in einem System, das Folgendes umfasst:

mehrere Lasten (23a bis 23n), die durch einen Verbraucher verwaltet werden, der einem Leistungssystem zugehörig ist;
mehrere Steuerungsvorrichtungen (24a bis 24n) zum Steuern eines Betriebs der Lasten (23a bis 23n), wobei das Verfahren die folgenden Schritte umfasst:
Speichern von Leistungsraten, die die Lasten (23a bis 23n) betreffen, in einer Leistungsratenspeicherungseinheit (105), die mit dem Leistungssystem verbunden ist und eine Betriebsplanzeit der Lasten (23a bis 23) in einer Betriebszeit-Speicherungseinheit (106) speichert:

Berechnen einer Betriebszeit von jeder Last (23a bis 23n) und einer vorübergehenden Reaktionszeit (Ta bis Te) der Lasten (23a bis 23n) basierend auf einer in der Leistungsraten-Speicherungseinheit (105) gespeicherten Leistungsrate;
Berechnen einer Korrekturzeit (t) zum Ausgleichen der Summen von Leistungsraten, bevor und nachdem die Leistungsraten geändert werden, unter Beibehaltung des Zeitintervalls der vorübergehenden Reaktionszeit (Ta bis Te) basierend auf der vorübergehenden Reaktionszeit (Ta bis Te) der Lasten (23a bis 23n), dem Zeitpunkt (tc), an dem die Leistungsrate geändert wird, einer Leistungsrate (Pp) vor dem Zeitpunkt (tc), an dem die Leistungsrate geändert wird, und einer Leistungsrate (Pa) nach der Zeitpunkt (tc), an dem die Leistungsrate geändert wird; und

Erhalten einer formalen Reaktionszeit der Lasten (23a bis 23n) durch Addieren der Korrekturzeit (t) zur vorübergehenden Reaktionszeit (Ta bis Te).

**Revendications**

1. Système de commande d'une opération de dispositif électrique comprenant :

   une pluralité de charges (23a-23n) gérées par un consommateur associé à un système de puissance ;
   une pluralité de dispositifs de commande (24a-24n) pour commander une opération des charges (23a-23n) ;
   **caractérisé par**
   une unité de calcul de temps d'opération (104) configurée pour calculer un temps de début d'une opération d'augmentation ou de réduction de puissance reçue de la pluralité de charges (23a-23n) sur la base d'une commande de contrôle pour demander une augmentation ou une réduction de puissance reçue du système de puissance de sorte que le temps de début soit différent pour chacune des charges (23a-23n) ;
   une unité de mémorisation de taux de puissance (105) pour mémoriser des taux de puissance relatifs aux charges (23a-23n) ; et
   une unité de mémorisation de temps d'opération (106) pour mémoriser un temps de programmation d'opération des charges (23a-23n),
   l'unité de calcul de temps d'opération (104) effectue :

      le calcul d'un temps d'opération de chaque charge (23a-23n) et d'un temps de réponse provisoire (Ta-Te) des charges (23a-23n) sur la base du taux de puissance mémorisé dans l'unité de mémorisation de taux de puissance (105) ;
      le calcul d'un temps de correction (t) pour égaliser les sommes de taux de puissance avant et après que les taux de puissance sont changés tout en maintenant l'intervalle de temps du temps de réponse provisoire (Ta-Te), sur la base du temps de réponse provisoire (Ta-Te) des charges (23a-23n), du temps (tc) auquel le taux de puissance est changé, d'un taux de puissance (Pp) avant le temps (tc) auquel le taux de puissance est changé, et d'un taux de puissance (Pa) après le temps (tc) auquel le taux de puissance est changé ; et
      l'obtention d'un temps de réponse définitif des charges (23a-23n) par l'ajout du temps de correction (t) au temps de réponse provisoire (Ta-Te).

2. Système selon la revendication 1, dans lequel chacun des dispositifs de commande comprend :

   une unité de communication (201) configurée pour échanger des informations avec une charge reliée à un dispositif de commande différent ; et
   une unité de surveillance d'état d'opération (203) configurée pour surveiller un état d'opération de la charge reliée à un dispositif de commande différent et/ou pour contrôler si une commande de contrôle a été ou non entrée dans chaque dispositif de commande (24a-24n) ;
   dans lequel l'unité de calcul de temps d'opération (104) calcule un temps d'opération de chacune des charges sur la base des informations obtenues de l'unité de surveillance et de la commande de contrôle.

3. Système selon la revendication 1, dans lequel le consommateur comprend un dispositif de gestion d'énergie pour gérer une opération de la pluralité de charges, et
   dans lequel le dispositif de gestion d'énergie comprend :

   une unité de communication configurée pour échanger des informations entre les charges respectives ; et
   une unité de surveillance d'état d'opération configurée pour surveiller un état d'opération des charges respectives et/ou un état d'entrée de la commande de contrôle de chacune des charges, et
   dans lequel l'unité de calcul de temps d'opération (104) calcule un temps d'opération de chacune des charges sur la base des informations obtenues de l'unité de surveillance et de la commande de contrôle.

4. Système selon la revendication 1, dans lequel un dispositif de gestion de système pour commander une opération de chacune des charges reliées au système de puissance est installé dans le système de puissance, et
   dans lequel le dispositif de gestion de système comprend :

une unité de communication configurée pour échanger des informations entre les charges respectives ; et
une unité de surveillance d'état d'opération configurée pour surveiller un état d'opération de chacune des charges et/ou un état d'entrée de la commande de contrôle de chacune des charges, et
dans lequel l'unité de calcul de temps d'opération (104) calcule un temps d'opération de chacune des charges sur la base des informations obtenues de l'unité de surveillance et de la commande de contrôle.

5. Système selon la revendication 1, dans lequel chacun des dispositifs de commande comprend :

une unité de réglage de temps d'opération configurée pour entrer une commande de contrôle dans chacune des charges par un consommateur, et
dans lequel l'unité de calcul de temps d'opération (104) calcule un temps d'opération de chacune des charges sur la base de la commande de contrôle entrée dans l'unité de réglage de temps d'opération.

6. Système selon l'une quelconque des revendications 1 à 5, dans lequel :

au moins l'une des charges est configurée en tant qu'une charge et un dispositif condensateur, dans lequel le dispositif condensateur est capable de stocker ou décharger une puissance,
le dispositif de commande comprend un organe de commande d'opération de charge et un organe de commande d'opération de dispositif condensateur,
l'unité de calcul de temps d'opération (104) calcule un temps de début d'opération de la charge et du dispositif condensateur sur la base de la commande de contrôle, et
l'organe de commande d'opération de charge et l'organe de commande d'opération de dispositif condensateur commandent une opération de la charge et du dispositif condensateur sur la base du résultat de calcul.

7. Système selon l'une quelconque des revendications 1 à 6, dans lequel un dispositif de génération est relié, solidairement avec la charge, au système de puissance, et
dans lequel le dispositif de génération comprend un dispositif de commande de génération configuré pour commander une opération du dispositif de génération, et
l'unité de calcul de temps d'opération (104) calcule un temps de début d'opération de la charge et un temps de commande d'opération du dispositif de génération sur la base de la commande de contrôle, et un organe de commande d'opération de la charge et un organe de commande d'opération du dispositif de commande de génération commandent une opération de la charge et du dispositif de génération sur la base du résultat de calcul.

8. Procédé de commande d'une opération de dispositif électrique dans un système comprenant :

une pluralité de charges (23a-23n) gérées par un consommateur associé à un système de puissance ;
une pluralité de dispositifs de commande (24a-24n) pour commander une opération des charges (23a-23n) ;
le procédé comprenant les étapes de :

la mémorisation, dans une unité de mémorisation de taux de puissance (105), de taux de puissance relatifs aux charges (23a-23n) reliée au système de puissance et la mémorisation d'un temps de programmation d'opération des charges (23a-23n) dans une unité de mémorisation de temps d'opération (106) ;
le calcul d'un temps d'opération de chaque charge (23a-23n) et d'un temps de réponse provisoire (Ta-Te) des charges (23a-23n) sur la base d'un taux de puissance mémorisé dans l'unité de mémorisation de taux de puissance (105) ;
le calcul d'un temps de correction (t) pour égaliser les sommes de taux de puissance avant et après que les taux de puissance sont changés tout en maintenant l'intervalle de temps du temps de réponse provisoire (Ta-Te), sur la base du temps de réponse provisoire (Ta-Te) des charges (23a-23n), du temps (tc) auquel le taux de puissance est changé, d'un taux de puissance (Pp) avant le temps (tc) auquel le taux de puissance est changé, et d'un taux de puissance (Pa) après le temps (tc) auquel le taux de puissance est changé ; et
l'obtention d'un temps de réponse définitif des charges (23a-23n) par l'ajout du temps de correction (t) au temps de réponse provisoire (Ta-Te).

## FIG. 1

14 CONSUMER

11 SYSTEM MANAGEMENT DEVICE

15 EMS

50   50

16

12 POWER PLANT

13 POWER SYSTEM

24a LOAD CONTROL DEVICE

24b LOAD CONTROL DEVICE

......

24n LOAD CONTROL DEVICE

23a LOAD

23b LOAD

......

23n LOAD

14 CONSUMER

14 CONSUMER

14 CONSUMER

EP 2 608 349 B1

## FIG. 2

EP 2 608 349 B1

# FIG. 3

# FIG. 4

# FIG. 5

```
        START
          │
          ▼
┌─────────────────────┐
│   RECEIVE LOAD      │ ── S1
│  CONTROL COMMAND    │
└─────────────────────┘
          │
          ▼
┌─────────────────────┐
│ TRANSMIT INFORMATION│ ── S2
│  TO DIFFERENT LOAD  │
└─────────────────────┘
          │
          ▼
┌─────────────────────┐
│ CHECK INFORMATION OF│ ── S3
│   DIFFERENT LOAD    │
└─────────────────────┘
          │
          ▼
┌─────────────────────┐
│    CALCULATE        │ ── S4
│  OPERATION TIME     │
└─────────────────────┘
          │
          ▼         S5
       ╱───────────╲        YES
      ╱  OPERATION   ╲──────────────┐
      ╲ TIME ARRIVES?╱              │
       ╲───────────╱               │
          │ NO                     │
          ▼                        ▼
┌─────────────────────┐   ┌──────────────────────────┐
│ WAIT FOR CERTAIN TIME│ S6 │ START OPERATION OF LOAD │ S7
└─────────────────────┘   └──────────────────────────┘
          │                        │
          └──(loop to S3)          ▼
                                 END
```

# FIG. 6

LOAD

DESIGNATED TIME

t g

TIME

t s        t e=t0

# FIG. 7

LOAD

DESIGNATED TIME

t g

TIME

t s    t 0    t e

# FIG. 8

LOAD

DESIGNATED TIME

t g

TIME

t s=t0          t e

# FIG. 9

LOAD

TIME

t s          t e

## FIG. 10

## FIG. 11

## FIG. 12A

ELECTRIC DEVICE 3
ELECTRIC DEVICE 2
ELECTRIC DEVICE 1

TIME

t a          t f

## FIG. 12B

ELECTRIC DEVICE 3
ELECTRIC DEVICE 2
ELECTRIC DEVICE 1

TIME

t a          t f

## FIG. 12C

ELECTRIC DEVICE 3
ELECTRIC DEVICE 2
ELECTRIC DEVICE 1

TIME

t a          t f

## FIG. 13

POWER
PLANT _12

13 POWER SYSTEM

11 SYSTEM MANAGEMENT DEVICE

14 CONSUMER

15 EMS

50

16

24a LOAD CONTROL DEVICE
24b LOAD CONTROL DEVICE
24n LOAD CONTROL DEVICE

23a LOAD
23b LOAD
23n LOAD

14 CONSUMER

14 CONSUMER

14 CONSUMER

EP 2 608 349 B1

FIG. 14

15 EMS

101 CONTROL COMMAND RECEPTION UNIT

102 CONTROL COMMAND OUTPUT UNIT

103 LOAD STATE MONITORING UNIT

104 OPERATION TIME CALCULATION UNIT

50

16

201 COMMUNICATION UNIT

202 POWER MEASUREMENT UNIT

205 DEVICE CONTROLLER

23a~23n LOAD

24a~24n LOAD CONTROL DEVICE

## FIG. 15

```
        ┌─────────┐
        │  START  │
        └─────────┘
             │
             ▼
  ┌──────────────────────────┐
  │ RECEIVE CONTROL COMMAND  │──── S1
  └──────────────────────────┘
             │
             ▼
  ┌──────────────────────────┐
  │   CHECK INFORMATION OF   │──── S2
  │        EACH LOAD         │
  └──────────────────────────┘
             │
             ▼
  ┌──────────────────────────┐
  │ CALCULATE OPERATION TIME │──── S3
  └──────────────────────────┘
             │
             ▼
  ┌──────────────────────────┐
  │    TRANSMIT OPERATION    │──── S4
  │    TIME TO EACH LOAD     │
  └──────────────────────────┘
             │
             ▼
        ┌─────────┐
        │   END   │
        └─────────┘
```

## FIG. 16

```
              ┌─────────┐
              │  START  │
              └─────────┘
                   │
                   ▼
  ┌──────────────────────────────┐
  │    RECEIVE OEPRATION TIME     │──── S1
  └──────────────────────────────┘
                   │
    ┌──────────────┤
    │              ▼
    │         ╱─────────╲     S2
    │        ╱           ╲
    │       ╱ OPERATION   ╲ ───── YES ──────────────┐
    │       ╲   TIME?     ╱                          │            S4
    │        ╲           ╱                           ▼
    │         ╲─────────╱              ┌──────────────────────────┐
    │              │ NO                │  START OPERATION OF LOAD  │
    │              ▼                   └──────────────────────────┘
    │   ┌──────────────────────┐                    │
    │   │  WAIT FOR CERTAIN    │──── S3              ▼
    │   │        TIME          │              ┌─────────┐
    │   └──────────────────────┘              │   END   │
    │              │                          └─────────┘
    └──────────────┘
```

## FIG. 17

EP 2 608 349 B1

## FIG. 18

**11 SYSTEM MANAGEMENT DEVICE**

24a~24n LOAD CONTROL DEVICE

EP 2 608 349 B1

# FIG. 19

```
        ┌─────────┐
        │  START  │
        └────┬────┘
             │
             ▼
   ┌──────────────────────┐
   │ CHECK INFORMATION OF │ ～ S1
   │      EACH LOAD       │
   └──────────┬───────────┘
              │
              ▼
   ┌──────────────────────┐
   │ CALCULATE OPERATION  │ ～ S2
   │        TIME          │
   └──────────┬───────────┘
              │
              ▼
   ┌──────────────────────┐
   │ TRANSMIT OPERATION   │ ～ S3
   │  TIME TO EACH LOAD   │
   └──────────┬───────────┘
              │
              ▼
        ┌─────────┐
        │   END   │
        └─────────┘
```

FIG. 20

EP 2 608 349 B1

## FIG. 21

FIG. 22

FIG. 23

EP 2 608 349 B1

# FIG. 24

# FIG. 25

LOAD

TIME

DISCHARGE

TIME

STORE  t s          t e

## FIG. 26

EP 2 608 349 B1

## FIG. 27

# FIG. 28

# FIG. 29

LOAD

TIME

GENERATOR OUTPUT

TIME

t s          t e

## FIG. 30

15 EMS

101 CONTROL COMMAND RECEPTION UNIT

102 CONTROL COMMAND OUTPUT UNIT

104 OPERATION TIME CALCULATION UNIT

103 LOAD STATE MONITORING UNIT

105 POWER RATE STORAGE UNIT

106 OPERATION TIME STORAGE UNIT

50

201 COMMUNICATION UNIT

202 POWER MEASUREMENT UNIT

205 DEVICE CONTROLLER

24a~24n LOAD CONTROL DEVICE

23a~23n LOAD

16

EP 2 608 349 B1

# FIG. 31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011281944 A
- JP 2006203959 A
- WO 2011142131 A1
- US 2011098869 A
- US 5462225 A